**Europäisches Patentamt**

**European Patent Office**

**Office européen des brevets**

(19)

(11) Veröffentlichungsnummer: **0 121 925**
**B1**

(12) # EUROPÄISCHE PATENTSCHRIFT

(45) Veröffentlichungstag der Patentschrift:
**12.07.89**

(51) Int. Cl.⁴: **G 11 B 15/02**

(21) Anmeldenummer: **84103956.3**

(22) Anmeldetag: **09.04.84**

(54) **Vorrichtung zum bedarfsweisen Abheben eines Magnetbandes von einem Schreib-Lesekopf eines Magnetbandgerätes.**

(30) Priorität: **12.04.83 DE 3313188**

(43) Veröffentlichungstag der Anmeldung:
**17.10.84 Patentblatt 84/42**

(45) Bekanntmachung des Hinweises auf die Patenterteilung:
**12.07.89 Patentblatt 89/28**

(84) Benannte Vertragsstaaten:
**DE FR GB**

(56) Entgegenhaltungen:
**EP-A-0 038 436**
**DE-A-3 032 482**
**DE-C-3 204 820**
**FR-A-1 420 835**
**US-A-2 612 566**
**US-A-3 141 594**
**US-A-3 518 647**
**US-A-3 747 938**
**US-A-3 864 749**

**IBM TECHNICAL DISCLOSURE BULLETIN, Band 13, Nr. 5, Oktober 1970, Seite 1334, New York, US; W.J. SCHAFFER et al.: "Self extending air bearing"**

(73) Patentinhaber: **Siemens Aktiengesellschaft Berlin und München, Wittelsbacherplatz 2, D-8000 München 2 (DE)**

(72) Erfinder: **Ulber, Armin, Blütenstrasse 11, D-8047 Karlsfeld (DE)**

## Beschreibung

Die Erfindung betrifft eine Vorrichtung gemäß dem Oberbegriff des Patentanspruches 1.

Bei Magnetbandgeräten wie sie z. B. in Verbindung mit Datenverarbeitungsanlagen eingesetzt werden, wird zur Verkürzung der Zugriffszeiten das Zurückspulen des Bandes mit einem Vielfachen der Arbeitsgeschwindigkeit durchgeführt. Da das Magnetband für den Informationsaufzeichnungsvorgang ständig den Magnetkopf berührt, bedeutet das Zurückspulen einen erhöhten Verschleiß, zu dessen Verminderung ein Abheben des Magnetbandes notwendig ist.

Dieses Abheben erfolgt bei bekannten Einrichtungen über pneumatisch oder elektromagnetisch angetriebene sogenannte Abhebeschuhe, welche das Magnetband vom Kopf wegdrücken. Eine derartige Einrichtung ist beispielsweise in IBM Technical Disclosure Bulletin Vol. 13, No. 5, Oktober 1970, S. 1334 beschrieben. Sie besitzt einen stationär angeordneten, pneumatisch betätigten Abhebeschuh für das Magnetband. Dem Abhebeschuh wird ein Betätigungsmedium über eine ortsfeste Zuführung zugeleitet und damit ein Zylinder ausgelenkt, der als Führungselement für das Magnetband dient. Selbst ein möglichst naher an den ortsfest ausgebildeten Magnetkopf herangesetzter einzelner Abhebeschuh bedingt eine relativ große Hubbewegung, um das Magnetband bedarfsweise eindeutig von dem Kopf abzuheben.

Aus der US-Patentschrift 3 864 749 ist darüber hinaus ein Magnetkopfpositioniersystem für einen Plattenspeicher bekannt, bei dem ein Magnetkopf unter Einwirkung einer Feder an den Aufzeichnungsträger, die Magnetplatte, herangeführt wird. Zwar wird dies hier mit einer kompakten Bauweise erreicht, jedoch besteht zwischen Speichereinrichtungen, die ein Magnetband bzw. eine Magnetplatte als Aufzeichnungsträger benutzen u. a. auch ein Unterschied in der Zuordnung von Aufzeichnungsträger zu dem Abtastsystem. Bei Magnetbandspeichern wird der magnetische Aufzeichnungsträger, das Magnetband, in der Schreib-Lesestation beim Vorbeilauf an den Schreib-Lesekopf herangeführt, bei Magnetplattenspeichern ist dies genau umgekehrt. Hier soll die Magnetplatte in einer definierten Ebene umlaufen und der zur Spurauswahl horizontal bewegliche Magnetkopf wird außerdem in vertikaler Richtung möglichst exakt an die Plattenoberfläche herangeführt. Die Probleme bei der Führung eines bandförmigen Aufzeichnungsträgers in bezug auf einen stationär angeordneten Schreib-Lesekopf bzw. eines über die Oberfläche eines schnell umlaufenden Plattenspeichers "fliegenden" Magnetkopfes sind völlig unterschiedlich. Einzelne Maßnahmen sind daher von der einen Speichertechnologie auf die andere nicht ohne weiteres übertragbar, wenn man sich die völlig unterschiedlichen Randbedingungen beider Speichertechnologien vergegenwärtigt.

Außerdem ist bei Magnetbandspeichern auch bekannt, den Verschleiß dadurch zu reduzieren, daß ein kontinuierlich fortbewegtes Textilband zwischen Magnetband und Schreib-Lesekopf geschoben wird. In der US-PS-2 612 566 ist ein magnetisches Aufzeichnungsverfahren beschrieben, bei dem zur Verminderung des Verschleißes im Bereich der Umlenkstellen des Magnetbandes ein Luftkissen erzeugt wird, indem durch Bohrungen in der Gleitfläche Luft zwischen Band und Gleitfläche geblasen wird.

Abhebevorrichtungen der bekannten Art haben nun den Nachteil, daß sie relativ platzaufwendig ausgestaltet sind, so daß bei Bandgeräten mit kompakten Aufbau Schwierigkeiten beim Einbau bestehen.

Aufgabe der Erfindung ist es, eine Vorrichtung der im Oberbegriff des Hauptanspruches bezeichneten Art derart auszugestalten, daß bei einem Magnetbandgerät in Kompaktbauweise mit einem Minimum an konstruktiven Führungselementen und Zuleitungen für das Betätigungsmedium ein besonders platzsparender Aufbau erzielt wird, der zudem nur eine geringe Hubbewegung für das sichere Abheben des Aufzeichnungsträgers erfordert.

Diese Aufgabe wird bei einer Vorrichtung der eingangs genannten Art gemäß dem kennzeichnenden Teil des ersten Patentanspruches gelöst.

Weitere vorteilhafte Ausführungsformen der Erfindung sind in den Unteransprüchen gekennzeichnet.

Die Abhebevorrichtung gemäß der Erfindung arbeitet mit der bei Magnetbandgeräten der genannten Art an sich schon vorhandenen komprimierten Luft, die über entsprechende Kompressoren erzeugt wird. Nach Freigabe des Überdruckes über entsprechende Ventile, werden über den Membranzylinder zwei Gleitschuhe die links und rechts des Magnetkopfes angeordnet sind gleichzeitig betätigt, dadurch ergibt sich ein spielfreies und sicheres Abheben des Magnetbandes. Die betätigende Luft wird gleichzeitig dazu verwendet, im Bereich der Gleitschuhe ein Luftkissen zu erzeugen.

Bei der erfindungsgemäßen Vorrichtung wird ein Membran-Zylinder verwendet, der im Gegensatz zu herkömmlichen pneumatischen Zylindern eine Kolbenstange aufweist, die gleichzeitig als Luftzuführung und als Führungselement für das Gehäuse des Membranzylinders dient.

Die einströmende Luft wirkt auf das untere Gehäusestück des Membranzylinders das formschlüssig mit den Führungselementen für das Band verbunden ist und über eine entsprechend gemeinsame Halterung auf der Kolbenstange geführt wird. Dadurch wird das untere Gehäusestück, das durch ein entsprechendes Membranstück mit der Kolbenstange verbunden ist, geführt durch die Halterung, in Luftströmungsrichtung bis zu einem definierten Anschlag, der mit Dämpfungsscheiben versehen ist, drückt.

Über eine entsprechend angeordnete Rückholfeder werden nach Abschalten der Druckluft, das untere Gehäusestück und damit verbunden die Führungselemente in Ruhestellung zurückgeführt.

Durch die erfindungsgemäße Ausgestaltung der Vorrichtung ergibt sich eine Abhebemöglichkeit des Magnetbandes auch bei beengten Platzverhältnissen im Bereich des Schreiblesekopfes, da ohne größeren Aufwand mehrere Führungselemente gleichzeitig angeordnet und angesteuert werden können.

Der Aufbau ist robust und wartungsarm und wenig störanfällig. Er ermöglicht außerdem die Einstellung einer exakten Führung des Magnetbandes im Bereich der Umlenkstellen.

Eine Ausführungsform der Erfindung ist in den Zeichnungen dargestellt und wird im folgenden beispielsweise näher beschrieben. Es zeigen

Fig. 1 eine schematische Darstellung der erfindungsgemäßen Abhebevorrichtung im Kopfbereich eines Magnetbandgerätes in Frontansicht und

Fig. 2 eine schematische Darstellung der Abhebevorrichtung teilweise in Schnittdarstellung.

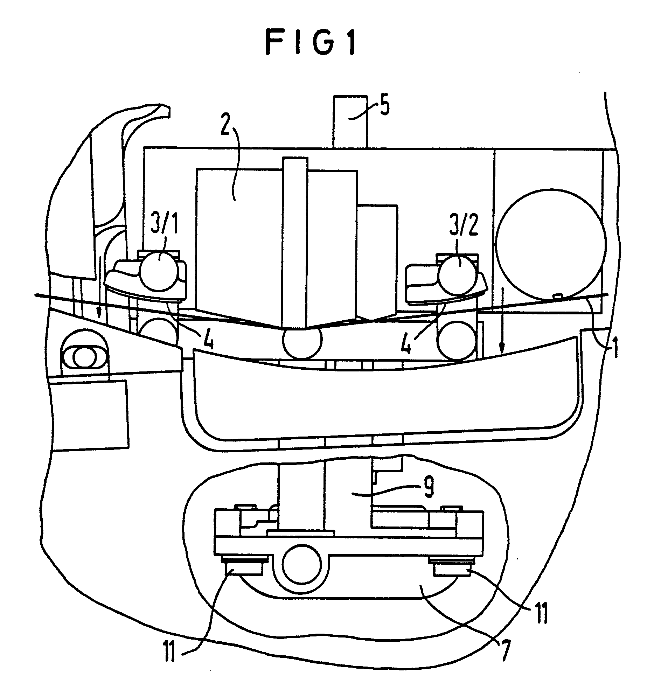

Bei dem in der Fig. 1 ausschnittsweise dargestellten Magnetbandgerät, daß in Verbindung mit einer Datenverarbeitungsanlage verwendet wird, wird von einer hier nicht dargestellten Vorratsspule zu einer entsprechenden Aufwickelspule, das Magnetband 1 entlang von einem als Schreiblesekopf ausgebildeten Magnetkopf 2 geführt. Zur Vermeidung eines erhöhten Verschleißes beim schnellen Zurückspulen des Magnetbandes sind links und rechts des Magnetkopfes zwei Führungselemente 3/1 und 3/2 angeordnet, die entsprechende Gleitflächen 4 zur Aufnahme des Bandes aufweisen. Über die im folgenden näher beschriebene Abhebevorrichtung werden beim Zurückspulen des Magnetbandes diese Führungselemente 3/1 und 3/2 aus der in der Fig. 1 dargestellten Ruhelage in Pfeilrichtung verschwenkt und dadurch das Magnetband 1 vom Schreiblesekopf 2 abgehoben. Das Magnetband 1 gleitet dabei auf Luftkissen, die durch entsprechend komprimierte Luft auf den Gleitflächen 4 der Führungselemente 3/1 und 3/2 erzeugt werden.

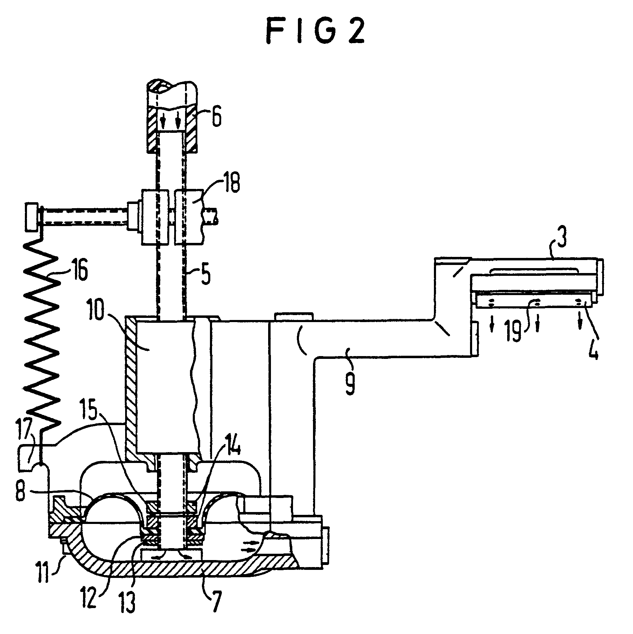

Die eigentliche Abhebevorrichtung die in einzelnen in der Fig. 2 dargestellt ist, enthält eine Kolbenstange 5, die hohl ausgestaltet ist und gleichzeitig als Führungsstange dient. Die Kolbenstange 5 ist ortsfest hinter dem Schreiblesekopf des Magnetbandgerätes befestigt und über einen Schlauch 6 mit einem, komprimierte Luft niederen Luftdruckes erzeugenden, hier nicht dargestellten, Kompressor verbunden. Mit der Kolbenstange 5 verbunden, ist ein Membranzylinder aus einem unteren Gehäusestück 7 und einem das untere Gehäusestück 7 überspannenden Membranstück 8 aus Gummi, daß in seinem zentralen Teil die Kolbenstange 5 umfaßt und abdichtet. Die Kolbenstange 5 mündet dabei in den zwischen dem Membranstück 8 und dem unteren Gehäusestück 7 gebildeten Kompressionsraum. Das untere Gehäusestück steht über ein Rohrleitungssystem 9, daß gleichzeitig als Halterung dient mit den eigentlichen Führungselement 3 von denen hier nur eines dargestellt ist, in Verbindung. Dieses Rohrleitungssystem 9 dient gleichzeitig als Halterung bzw. obere Gehäusehälfte des Membranzylinders und wird auf der Kolbenstange 5 über eine als Kugelbüchse ausgebildete Führung exakt geführt. Das Rohrleitungssystem mit der integrierten oberen Gehäusehälfte 9 ist mit dem unteren Gehäusestück 7 über Schraubelemente 11 verbunden und klemmt dabei das Membranstück 8 luftdicht ein. Im Bereich der Kolbenstange erfolgt die Abdichtung und Halterung des Membranstückes über eine Scheibe 12 mit zugehörigen Greifring 13 und mit oberhalb des Membranstückes angeordneten Dämpfungsscheiben 14, die über einen Sprengring 15 auf der Kolbenstange 5 geführt werden. Zwischen dem unteren Gehäusestück 7 bzw. seinen entsprechenden Rohrleitungssystem 9 mit zugeordneter integrierter Halterung (obere Gehäusehälfte) und der ortsfesten Kolbenstange ist eine Rückholfeder 16 angeordnet. Die Rückholfeder ist einerseits an einer Ausformung 17 der Halterung 9 angelenkt, andererseits über ein entsprechendes Klemmstück 18 an der Kolbenstange 5.

Betätigt wird die Abhebevorrichtung durch ein hier nicht dargestelltes Ventil, das Luft über den Schlauch 6 der Kolbenstange 5 zuführt. Die komprimierte Luft niedrigen Druckes füllt den Membranzylinder, dadurch wird das untere Gehäusestück 7 entgegen dem Membranstück 8 nach unten bewegt, und damit über die Führungselemente 3/1 und 3/2 das Magnetband 1 vom Schreiblesekopf abgehoben. Gleichzeitig durchströmt die komprimierte Luft den Membranzylinder und wird über das Rohrleitungssystem 9 dem mit Luftaustrittsöffnungen 19 versehenen Gleitflächen der Führungselemente 3 zugeführt. Die ausströmende Luft erzeugt zwischen den Gleitflächen 4 und dem Magnetband 1 ein Luftkissen, auf dem das Magnetband beim Zurückspulen gleitet.

**Patentansprüche**

1. Vorrichtung für ein Magnetbandgerät zum bedarfsweisen, insbesondere beim schnellen Rücklauf bewirkten Abheben eines bandförmigen Aufzeichnungsträgers (1) von einem stationär angeordneten Schreib-Lesekopf (2) unter Verwendung eines in der Umgebung dieses Schreib-Lesekopfes vorgesehenen, im wesentlichen senkrecht zum Aufzeichnungsträger auslenkbaren und zur Reibungserniedrigung pneumatisch gelagerten Führungselementes (3), das mit einer als Zuleitung ein Betätigungsmedium ausgeformten, ortsfesten Kolbenstange (5) in Verbindung steht, gekennzeichnet durch einen das über die Kolbenstange (5) zugeführte Betätigungsmedium aufnehmenden Membranzylinder bestehend aus einem entgegen der Kraft eines Federelementes (16) bewegbaren unteren Gehäusestück (7) und einem dieses untere Gehäusestück (7) überspannenden, ein Ende der Kolbenstange (5) aufnehmenden Membranstück (8) und durch ein Paar von Führungselementen (3/1, 3/2), die in Bandlaufrichtung gesehen beiderseits des Schreib-Lesekopfes (2) angeordnet und mit dem unteren Gehäusestück (7) gemeinsam in einer Halterung (9) auf der als Führung ausgebildeten Kolbenstange (5) beweglich gelagert sind.

2. Vorrichtung nach Anspruch 1, dadurch gekennzeichnet, daß die gemeinsame Halterung (9) auf der Kolbenstange (5) über eine Kugelbüchse (10) geführt ist.

3. Vorrichtung nach einem der Ansprüche 1 oder 2, dadurch gekennzeichnet, daß die Führungselemente (3/1, 3/2) über je ein als Luftführung ausgebildetes Verbindungsstück (9) mit dem unteren Gehäusestück (7) verbunden sind und an ihren dem Aufzeichnungsträger (1) zugewandten Seiten Luftaustrittsdüsen (19) zur Erzeugung eines Luftkissens aufweisen.

4. Vorrichtung nach einem der Ansprüche 1 bis 3, dadurch gekennzeichnet, daß das Federelement (16) als Zugfeder ausgebildet und einerseits an der Kolbenstange (5) und andererseits an dem unteren Gehäusestück (7) befestigt ist.

## Claims

1. Device for a magnetic tape apparatus for the lifting off, if necessary, in particular activated in fast rewind, of a recording carrier (1) in tape form from a stationarily arranged read/write head (2), making use of a guide element (3) provided in the vicinity of this read/write head, deflectable essentially perpendicularly to the recording carrier and pneumatically mounted for friction reduction, which guide element is in connection with a fixed piston rod (5), formed as a supply line for an actuating medium, characterized by a diaphragm cylinder, receiving the actuating medium fed via the piston rod (5) and consisting of a lower housing piece (7), movable against the force of a spring element (16) and a diaphragm piece (8), stretching over this lower housing piece (7) and accommodating one end of the piston rod (5), and by a pair of guide elements (3/1, 3/2), which are arranged on both sides of the read/write head (2), seen in tape running direction, and are mounted movably with the lower housing piece (7) together in a holder (9) on the piston rod (5) designed as guide.

2. Device according to claim 1, characterized in that the common holder (9) is guided on the piston rod (5) via a ball bush (10).

3. Device according to one of claims 1 or 2, characterized in that the guide elements (3/1, 3/2) are connected via a connecting piece (9) each, designed as air duct, to the lower housing piece (7) and have on their sides facing the recording carrier (1) air outlet nozzles (19) for the generation of an air cushion.

4. Device according to one of claims 1 to 3, characterized in that the spring element (16) is designed as a tension spring and is fastened on the one hand to the piston rod (5) and on the other hand to the lower housing piece (7).

## Revendications

1. Dispositif pour un appareil à bande magnétique, pour écarter le cas échéant, notamment dans le cas d'un retour rapide, un support d'enregistrement (1) en forme de bande, d'une tête d'enregistrement-lecture (2) montée fixe, moyennant l'utilisation d'un élément de guidage (3), qui est prévu dans l'environnement de cette tête d'enregistrement-lecture, peut être dévié sensiblement perpendiculairement au support d'enregistrement, est suspendu pneumatiquement de manière à réduire le frottement et est relié à une tige de piston fixe (5), réalisée sous la forme d'une conduite d'amenée pour un fluide d'actionnement, caractérisé par un cylindre à membrane recevant le fluide d'actionnement, envoyé par l'intermédiaire de la tige de piston (5), et constitué par un élément inférieur de carter (7), déplaçable à l'encontre de la force d'un élément de ressort (16), et un élément formant membrane (8), qui recouvre cet élément inférieur de carter (7) et loge une extrémité de la tige de piston (5), et par un couple d'éléments de guidage (3/1, 3/2), qui sont disposés des deux côtés de la tête d'enregistrement-lecture (2), lorsqu'on regarde dans la direction de déplacement de la bande, et sont supportés, en commun avec l'élément de carter inférieur (7), dans un support (9) de manière à être déplaçables sur la tige de piston (5) réalisée sous la forme d'un guide.

2. Dispositif suivant la revendication 1, caractérisé par le fait que le support commun (9) est guidé sur la tige de piston (5) par l'intermédiaire d'un manchon à billes (10).

3. Dispositif suivant l'une des revendications 1 ou 2, caractérisé par le fait que les éléments de guidage (3/1, 3/2) sont reliés à l'élément de carter inférieur (7) par l'intermédiaire d'un élément de liaison respectif (9) réalisé à la manière d'une conduite d'air, et comportent, sur leurs faces tournées vers le support d'enregistrement (1), des buses (19) de sortie de l'air, servant à produire un coussin d'air.

4. Dispositif suivant l'une des revendications 1 à 3, caractérisé par le fait que l'élément formant ressort (16) est réalisé sous la forme d'un ressort de traction et est fixé d'une part sur la tige de piston (5) et d'autre part sur l'élément de carter inférieur (7).

# F I G 1

# F I G 2